# EUROPÄISCHE PATENTSCHRIFT

(11) **EP 1 646 463 B1**
(45) Veröffentlichungstag und Bekanntmachung des Hinweises auf die Patenterteilung: **07.03.2007**
(21) Anmeldenummer: 04740717.6
(22) Anmeldetag: 07.07.2004
(51) Int. Cl.: B22D 11/128, F28F 5/02

(54) **INNENGEKUEHLTE STRANGFUEHRUNGSROLLE**
INTERNALLY COOLED BILLET GUIDING ROLLER
GALET DE GUIDAGE DE BARRE REFROIDI PAR L'INTERIEUR

(30) Priorität: 18.07.2003 AT 11322003
(43) Veröffentlichungstag der Anmeldung: 19.04.2006
(73) Patentinhaber: Voest-Alpine Industrieanlagenbau GmbH & Co, 4031 Linz (AT)
(72) Erfinder: DEIBL, Guenther, A-4060 Leonding (AT); GUTTENBRUNNER, Josef, A-4522 Sierning (AT); LANSCHUETZER, Josef, A-4310 Mauthausen (AT); POEPPL, Johann, A-4202 Kirchschlag (AT); SHAN, Guoxin, A-4020 Linz (AT); THOENE, Heinrich, A-4020 Linz (AT); WIMMER, Franz, A-4752 Riedau (AT)
(74) Vertreter: Berg, Peter
(86) Internationale Anmeldenummer: PCT/EP2004/007399
(87) Internationale Veröffentlichungsnummer: WO 2005/016578

(56) Entgegenhaltungen:
- US-A- 4 442 883

## Beschreibung

Die Erfindung betrifft eine innengekühlte Strangführungsrolle, vorzugsweise für eine Stranggießanlage, mit einer zentralen drehbaren Welle und mindestens einem auf dieser Welle verdrehgesichert abgestützten Rollenmantel.

Strangführungsrollen werden in Stranggießanlagen zum Stützen und Führen von kontinuierlich gegossenen Metallsträngen nach deren Austritt aus einer Kokille in einem Strangführungsgerüst eingesetzt. Sie sind hohen thermischen Belastungen ausgesetzt, da die gegossenen Metallstränge die Kokille mit einer Temperatur von über 1000°C verlassen, insbesondere wenn es sich um Stahlstränge handelt. Bei dickeren Strängen, speziell bei Brammenformaten, ist noch ein ausgeprägter flüssiger Kern im Strang vorhanden, durch den ferrostatische Kräfte auf die Strangführungsrollen einwirken. Zusätzlich müssen von den Strangführungsrollen Verformungskräfte aus der Strangbiegung abgestützt werden. Dem entsprechend sind die Strangführungsrollen üblicherweise mit einer Innenkühlung ausgestattet und weisen eine den mechanischen Belastungen entsprechende robuste Bauart auf. Große Strangbreiten der gegossenen Stränge von bis zu 3 m erfordern eine Mehrfachlagerung der Strangführungsrolle und dementsprechend einen mehrteiligen Aufbau der stützenden Strangführungsrollen.

Für die Ausgestaltung der Innenkühlung einer Strangführungsrolle sind bereits eine Reihe von Lösungsvorschläge aus dem Stand der Technik bekannt.

Nach einer Gruppe von Lösungsvorschlägen ist ein ringförmiger Kühlmittelkanal oder es sind mehrere Strömungskanäle in einer ringförmigen Anordnung zwischen einem Rollenmantel und einer zentralen Welle oder Achse angeordnet. Ein genereller Nachteil dieser Ausführungsform ergibt sich aus dem großen Abstand zwischen der Rollenoberfläche und den Kühlmittelkanälen, wodurch es wegen des verzögerten Wärmetransportes am Rollenmantel zu hohen Oberflächentemperaturen kommt und daher eine zusätzliche äußere Kühlung notwendig ist.

Eine dieser Gruppe von Strangführungsrollen zugehörende Strangführungsrolle ist beispielsweise aus der DE-A 25 52 969 bekannt. Es handelt sich hierbei um eine Strangführungsrolle mit einer mehrfach gelagerten durchgehenden Welle, auf der einzelne Rollenmäntel durch eine Schweißverbindung drehfest angeordnet sind. Zwischen der zentralen Welle und jedem Rollenmantel ist ein Ringraum als Kühlmittelkanal ausgebildet und mit zentralen Versorgungsleitungen verbunden. Diese verschweißte Bauart lässt eine Zerlegung der Strangführungsrolle und damit einen Austausch der thermisch und mechanisch stark belasteten Rollenmäntel nicht zu. Da der Kühlmittelkanal zwischen der Welle und dem Rollenmantel verläuft, befindet er sich in einem großen Abstand von der Rollenmanteloberfläche, wodurch die Wärmeabfuhr aus dem Rollenmantel beeinträchtigt ist. Vielmehr wirkt der Rollenmantel im Ganzen als Wärmespeicher.

In der WO 02/38972 A1 wird anhand der Figuren 1 a und 1 b von einem Stand der Technik berichtet, der eine Strangführungsrolle mit einer zentralen mehrfach gelagerten Welle und mehreren darauf angeordneten Rollenmäntel betrifft. Jeder Rollenmantel liegt mit seiner gesamten Innenfläche auf der Außenfläche der Welle auf und ist mit ihr über eine Passfeder drehfest verbunden. Die Innenkühlung dieser Strangführungsrolle erfolgt über eine zentral in der Welle geführte Kühlmittelleitung. Eine Strangführungsrolle dieser Bauart weist den grundlegenden Nachteil eines besonders weiten Wärmetransportweges von der Manteloberfläche bis zur Kühlmittelleitung auf. Der montagebedingte Ringspalt zwischen der Welle und dem Rollenmantel wirkt als Isolator und behindert die Wärmeabfuhr aus der Strangführungsrolle zusätzlich.

Aus der WO 02/38972 A1 ist weiters eine Strangführungsrolle mit einer mehrfach gelagerten Welle und aufgesetzten Rollenmäntel bekannt, wobei jeder Rollenmantel mit einer Passfeder auf der Welle verdrehgesichert angeordnet ist. Zwischen dem Rollenmantel und der Welle ist über einen Teilbereich der Längserstreckung des Rollenmantels ein Ringraum ausgebildet, der mit einem Material hoher thermischer Wärmeleitfähigkeit gefüllt ist. Die Wärmeabfuhr aus der Strangführungsrolle erfolgt durch eine Innenkühlung über eine die Welle durchsetzende zentrale Kühlmittelleitung. Durch den wärmeleitfähigen Füllstoff wird die Sperrwirkung eines Luftspaltes zwischen Rollenmantel und Welle zwar vermieden, es bleibt jedoch trotzdem der große Abstand zwischen der thermisch belasteten Rollenmantel-Oberfläche und der Kühlmittelleitung bestehen.

Eine Strangführungsrolle mit einem einzigen Rollenmantel und Kühlmittelkanälen unterschiedlicher Ausgestaltung zwischen dem Rollenmantel und dem Rollenkern ist weiters aus der US-A 4,442,883 bekannt.

Nach einer weiteren Gruppe von bekannten Lösungsvorschlägen sind Kühlmittelkanäle direkt in einem im Wesentlichen einstückigen Rollenkörper integriert, wobei diese Kühlmittelkanäle von durchgehenden Bohrungen gebildet sind. Solcherart ist es möglich, die Kühlmittelkanäle nahe an der Rollenoberfläche anzuordnen und mit den sich dadurch ergebenden verkürzten Wärmetransportweg eine verstärkte Kühlwirkung zu erreichen.

Strangführungsrollen dieser Art mit nahe an der Rollenoberfläche gleichmäßig verteilt angeordneten Kühlmittelbohrungen sind aus der WO 93/19874, der US-A 5,279,535 und der US-A 4,506,727 bereits bekannt. Diese Strangführungsrollen sind von einem einstückigen Rollenkörper mit beidseitig anschließenden Lagerzapfen gebildet. Die Kühlmittelversorgung erfolgt über eine stirnseitig an den Lagerzapfen anschließende Drehdurchführung und eine zentrale Versorgungsbohrung, von der ausgehende radiale Stichleitungen zu den an der Rollenperipherie angeordneten Kühlmittelbohrungen führen. Eine Vielzahl von peripheren Kühlmittelbohrungen wird ausgehend von einer Stichleitung mit Kühlmittel versorgt, wobei die Strangführungsrolle in wechselnder Richtung von Kühlmittel durchströmt wird. Die Umlenkung des Kühlmittels erfolgt in stirnseitig an den Rollenköper befestigten Ringflanschen durch entsprechende Umleitkanäle, die aufeinander abfolgende Kühlmittelbohrungen verbinden. Einstückige Strangführungsrollen sind jedoch nur in Stranggießanlagen zur Herstellung verhältnismäßig schmaler Brammenstränge mit einer Strangbreite bis zu 900 mm, sowie für Stränge mit Vorblock- und Knüppelquerschnitt einsetzbar. Zusätzlich erfordert die einstückige Rolle bei Schäden an der Rollenoberfläche aufwändige Reparaturarbeiten oder den Austausch der ganzen Strangführungsrolle.

Eine Strangführungsrolle mit ebenfalls einstückigem Aufbau des Rollenkörpers und damit eingeschränkter Einsatzmöglichkeit ist aus der DE-C 33 15 376 bekannt. Lediglich die Kühlmittelzuteilung an die peripher angeordneten Kühlmittelbohrung erfolgt selektiv, ausgehend von einer im Rollenkörper angeordnete Kühlmittelkammer, durch eine einzelne Kühlmittelbohrungen freigebende Steuerscheibe.

Aufgabe der vorliegenden Erfindung ist es daher, die Nachteile des bekannten Standes der Technik zu vermeiden und eine Strangführungsrolle mit Innenkühlung vorzuschlagen, die die vom Rollenmantel aufgenommenen Wärmemengen schnell abführt und die den auftretenden mechanischen und thermischen Belastungen durch den Strang besser gerecht wird. Im Besonderen soll die Wartungsfreundlichkeit der Strangführungsrolle erhöht und Instandhaltungsarbeiten kosteneffizienter durchgeführt werden können. Weiters ist es Aufgabe der Erfindung, eine auch für große Gießbreiten geeignete Strangführungsrolle bereitzustellen, die so strukturiert ist, dass Instandhaltungsarbeiten auf den Austausch verschleißanfällige Bauteile beschränkt bleiben.

Diese Aufgabe wird bei einer Strangführungsrolle der erfindungsgemäßen Art dadurch erreicht, dass der Rollenmantel von Kühlmittelkanälen durchsetzt ist und die Kühlmittelkanäle in konstantem Abstand von der zylindrischen Rollenmantel-Außenfläche des Rollenmantels im Rollenmantel angeordnet sind. Die Kühlmittelkanäle im Inneren des Rollenmantels sind nach einer bevorzugten Ausführungsform parallel zur Drehachse der Strangführungsrolle ausgerichtet. Sie können aber auch in ihrer Längserstreckung wendelfömig, d.h. entlang einer Wendellinie um die Drehachse der Strangführungsrolle angeordnet sein. Die Kühlmittelkanäle sind im Inneren des Rollenmantels an der Rollenperipherie nahe der Rollenmantel-Außenfläche gleichmäßig verteilt angeordnet und von Durchgangsbohrungen gebildet, wodurch eine gleichmäßige Rollenmantelkühlung erreicht wird. Der Abstand der Kühlmittelkanäle von der Rollenmantel-Außenfläche liegt vorzugsweise zwischen 10 und 40 mm. Damit bleibt die zentrale Welle von der thermischen Belastung des Rollenmantels weitestgehend unbeeinflusst. Die Versorgung der Kühlmittelkanäle mit Kühlmittel erfolgt ausgehend von zentralen Kühlmittelleitungen in der zentralen Welle in beliebiger Ausgestaltung.

Zur einfachen Fertigung der Kühlmittelkanäle im Rollenmantel kann der Rollenmantel aus zwei ringförmigen Hülsen bestehen, die drehfest miteinander verbunden sind und wobei die Kühlmittelkanäle an den verbindenden Mantelflächen der beiden ringförmigen Hülsen in mindestens eine dieser verbindenden Mantelflächen eingearbeitet sind. Die Verbindung der beiden ringförmigen Hülsen des Rollenmantels kann beispielsweise durch eine Schrumpfverbindung oder durch stirnseitige Verschweißung erfolgen.

Nach einer weiteren zweckmäßigen Ausführungsform ist es möglich, die Kühlmittelkanäle ebenfalls möglichst nahe zur Rollenmantel-Außenfläche dadurch zu verlagern, dass der Rollenmantel aus zumindest einer äußeren die Rollenmantel-Außenfläche ausbildenden Hülse, ringförmigen Seitenteilen und einem Verdrängungskörper besteht und dieser Verdrängungskörper in einem sich zwischen den ringförmigen Seitenteilen erstreckenden Hohlraum des Rollenmantels eingesetzt ist, wobei der Verdrängungskörper gemeinsam mit der Innenwand der äußeren Hülse Kühlmittelkanäle für die Durchleitung eines Kühlmittels bildet. Der vorzugsweise aus einem Kunststoff gefertigte Verdrängungskörper ermöglicht die einfache Ausbildung beliebig gestalteter und geführter Kühlmittelkanäle. Die Querschnitte der Kühlmittelkanäle können auch die Form von Ringsegmenten einnehmen oder auf einen einzigen ringförmigen Kühlmittelkanal reduziert sein.

Nach einer bevorzugten Ausführungsform der Erfindung ist zwischen dem Rollenmantel und der zentralen Welle mindestens ein Wasserleitring angeordnet. Nach einer zweckmäßigen Ausführungsform ist der Wasserleitring in den Endbereichen der Längserstreckung des Rollenmantels zwischen dem Rollenmantel und der zentralen Welle angeordnet. Durch die Ausbildung der Wasserleitringe als eigene Bauteile und deren Anordnung in den Randbereichen jedes Rollenmantels wird eine funktionelle Trennung zwischen den Bauteilen erreicht. Der Wasserleitring dient ausschließlich der Kühlmittelzuführung zu den Kühlmittelkanälen und ist mit seinem Innendurchmesser und Außendurchmesser so bemessen, dass auf ihn möglichst keine Reaktionskräfte des Stranges und auch keine Antriebskräfte aus den Rollenantrieben einwirken und über ihn übertragen werden. Durch entsprechende Abstufungen im Wellendurchmesser an den Kontaktflächen mit den Wasserleitringen wird gleichzeitig eine leichte Montage und Demontage der Strangführungsrolle für Wartungsarbeiten und den Austausch eines Rollenmantels ermöglicht.

Eine vorteilhafte Ausgestaltung besteht darin, dass die Kühlmittelkanäle im Rollenmantel über im Wesentlichen radiale Stichleitungen mit einer in der zentralen Welle angeordneten Kühlmittelleitung für die Zu- und Ableitung eines Kühlmittels verbunden und die radialen Stichleitungen durch die Wasserleitringe geführt sind.

Sofern zwischen der zentralen Welle und dem Rollenmantel Wasserleitringe angeordnet sind, sind die radialen Stichleitungen innerhalb der Längserstreckung der Wasserleitringe angeordnet. Zweckmäßig münden die radialen Stichleitungen innerhalb der Längserstreckung der Wasserleitringe in mindestens eine Verteiler-Ringnut des Wasserleitringes. Solcherart kann eine Vielzahl von peripheren Kühlmittelkanälen ausgehend von einer in der zentralen Welle angeordneten Kühlmittelleitung und zumindest einer daran anschließenden radialen Stichleitung für die Kühlmittelzufuhr und die Kühlmittelabfuhr gleichmäßig mit Kühlmittel versorgt werden.

Insbesondere aus fertigungstechnischen Gründen sind die Stichleitungen im Rollenmantel von im Wesentlichen halbmondförmigen Ausfräsungen gebildet, in deren eine Seitenwange jeweils eine der peripheren Kühlmittelkanäle mündet.

Ein weitgehend optimales Verhältnis von Kühlwirkung und fertigungstechnischem Aufwand bei der Herstellung der Kühlmittelkanäle wird erreicht, wenn mehrere, vorzugsweise drei, im Rollenmantel parallel nebeneinander angeordnete Kühlmittelkanäle zu einem durchgehenden Kühlmittelkanal verbunden sind und Verbindungskanäle zwischen benachbarten Kühlmittelkanälen von stirnseitigen Einfräsungen im Rollenmantel gebildet sind.

Zur Übertragung der auf den Rollenmantel einwirkenden Kräften auf die zentrale Welle ist der Rollenmantel zumindest über einen Teilbereich seiner Längserstreckung direkt auf der zentralen Welle abgestützt.

Zur Vermeidung von Leckagen an den Kühlmittelleitungen zwischen den einzelnen Bauteilen der Strangführungsrolle sind zwischen den Wasserleitringen und dem Rollenmantel und zwischen den Wasserleitringen und der zentralen Welle Dichtelemente, vorzugsweise in Ringnuten eingesetzte Dichtringe, angeordnet.

Eine formschlüssige Verbindung des Rollenmantel auf der zentralen Welle wird durch mindestens eine Verdrehsicherung erreicht, vorzugsweise durch eine oder mehrere Passfedern oder sonstige gleichwirkende Bauteile.

Eine mögliche Ausgestaltung der Kühlmitteldurchleitung durch die Strangführungsrolle besteht darin, dass die in der zentralen Welle geführte Kühlmittelleitung von einer Stirnseite der zentralen Welle ausgeht und die in der zentralen Welle angeordnete Kühlmittelleitung für die Kühlmittelabführung an der gegenüberliegenden Stirnseite der zentralen Welle mündet und jeder Kühlmittelleitung eine Drehdurchführung zugeordnet ist.

Eine vorteilhafte Ausführungsform, durch die die Kühlmittelversorgung der Strangführungsrollen auf eine Anlagenseite, bzw. Seite der Strangführung einer Stranggießanlage, beschränkt werden kann, besteht darin, dass die in der zentralen Welle geführten Kühlmittelleitungen für die Zu- und Ableitung des Kühlmittels in einer Stirnseite der zentralen Welle münden und diesen Kühlmittelleitungen eine mehrgängige Drehdurchführung zugeordnet ist. Diese Ausführungsform ist bevorzugt bei angetriebenen, aber auch bei nicht angetriebenen Strangführungsrollen einsetzbar.

Als Kühlmittel wird üblicherweise Kühlwasser verwendet.

Weitere Vorteile und Merkmale der vorliegenden Erfindung ergeben sich aus der nachfolgenden Beschreibung nicht einschränkender Ausführungsbeispiele, wobei auf die beiliegende Figuren Bezug genommen wird, die folgendes in schematischer Darstellung zeigen:
- Fig. 1: einen Längsschnitt durch eine erfindungsgemäße Strangführungsrolle,
- Fig. 2: Querschnitt durch die Strangführungsrolle entlang der Schnittlinie A - A in Fig. 1,
- Fig. 3: Querschnitt durch die Strangführungsrolle entlang der Schnittlinie B - B in Fig. 1,
- Fig. 4: einen Längsschnitt durch eine erfindungsgemäße Strangführungsrolle nach einer weiteren Ausführungsform,
- Fig. 5: einen zweiteiligen Rollenmantel mit einem wendelförmigen Kühlmittelkanal,
- Fig. 6: einen Längsschnitt durch eine erfindungsgemäße Strangführungsrolle nach einer weiteren Ausführungsform.

Die Figurendarstellungen zeigen eine erfindungsgemäße Strangführungsrolle in schematischer Darstellung, wie sie beispielsweise für die Anwendung in einer Strangführung einer Stranggießanlage zur Herstellung von Metallsträngen großer Strangbreite mit Brammen- oder Dünnbrammenquerschnitt geeignet ist. Gleiche oder gleichwirkende Bauteile in verschiedenen Ausführungsformen sind mit gleichen Bezugszeichen gekennzeichnet.

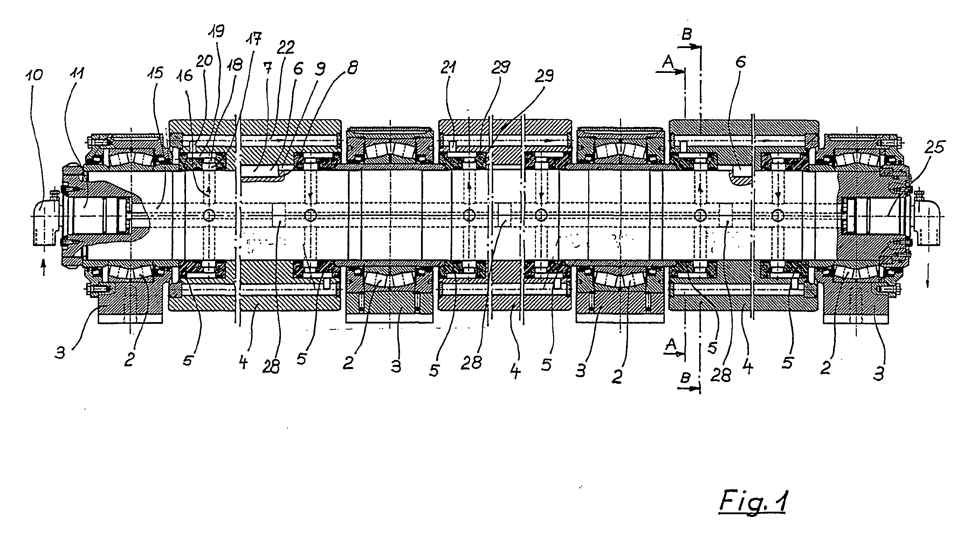

Die in Fig. 1 dargestellte Strangführungsrolle umfasst eine durchgehende, zentralen Welle 1, die in vier Lagern 2 drehbar abgestützt ist. Die Lager und die sie tragenden Lagergehäuse 3 stützen sich ihrerseits in einem nicht dargestellten Strangführungsgerüst einer Stranggießanlage ab. Als Lager werden üblicherweise Wälzlager eingesetzt. Der zentralen Welle 1 sind drei Rollenmäntel 4 zugeordnet, wobei jeder der drei Rollenmäntel direkt auf der Welle 1 abgestützt ist. Die Rollenmantel-Außenfläche 4a des Rollenmantels steht in der Produktionsphase der Stranggießanlage in Linienkontakt mit dem gegossenen Strang und nimmt von ihm Wärme auf. Zusätzlich sind jedem Rollenmantel zwei Wasserleitringe 5 zugeordnet, wobei diese Wasserleitringe 5 zwischen der zentralen Welle 1 und dem Rollenmantel 4 in den Endbereichen seiner Längserstreckung positioniert sind.

Die Lager 2 und die sie umschließenden Lagergehäuse 3 befinden sich außerhalb der Längserstreckung der benachbarten Rollenmäntel 4. Mit einer Verdrehsicherung 6 ist die Position jedes Rollenmantels 4 zur Welle 1 drehfest festgelegt. Diese Verdrehsicherung 6 ist von einer Passfeder 7 gebildet, die mittig bezüglich der Längserstreckung des jeweiligen Rollenmantels 4 in einander zugeordnete Längsnuten 8, 9 der zentralen Welle 1 und des jeweiligen Rollenmantels 4 eingreift, eine formschlüssige Verbindung bildet und auf die Rollen einwirkende Drehmomente überträgt.

Die Strangführungsrolle ist mit einer Innenkühlung ausgestattet. Der Verlauf der Kühlmittelströmung ist in Fig. 1 durch Pfeile gekennzeichnet. Die Kühlmittelzuführung erfolgt an einer Stirnseite der zentralen Welle 1 über eine Drehdurchführung 10, die in eine stirnseitige Ausnehmung 11 der zentralen Welle 1 eingesetzt ist. Die Kühlmittelabführung erfolgt an der gegenüberliegenden Stirnseite der zentralen Welle 1 durch eine weitere Drehdurchführung 12, die gleichermaßen in eine stirnseitige Ausnehmung 13 an der zentralen Welle eingesetzt ist. Durch eine zentrale Kühlmittelleitung 15, die die zentrale Welle 1 in axialer Richtung durchsetzt, durch davon abzweigende radiale Stichleitungen 16, die in einer ersten Verteiler-Ringnut 17 am Wasserleitring 5 münden, durch weitere radiale Stichleitungen 18 , die die erste Verteiler-Ringnut 17 mit einer zweiten Verteiler-Ringnut 19 am Wasserleitring 5 verbinden, sowie durch weitere radiale Stichleitungen 20 im Rollenmantel 4, die von halbmondförmige Ausfräsungen 21 gebildet sind, wird Kühlmittel in Kühlmittelkanäle 22 eingeleitet, die in Wangen dieser Ausfräsungen 21 münden und die parallel zur Drehachse 25 der Strangführungsrolle verlaufen und im geringen Abstand von der Rollenmanteloberfläche gleichmäßig verteilt im Inneren des Rollenmantel 4 angeordnet sind.

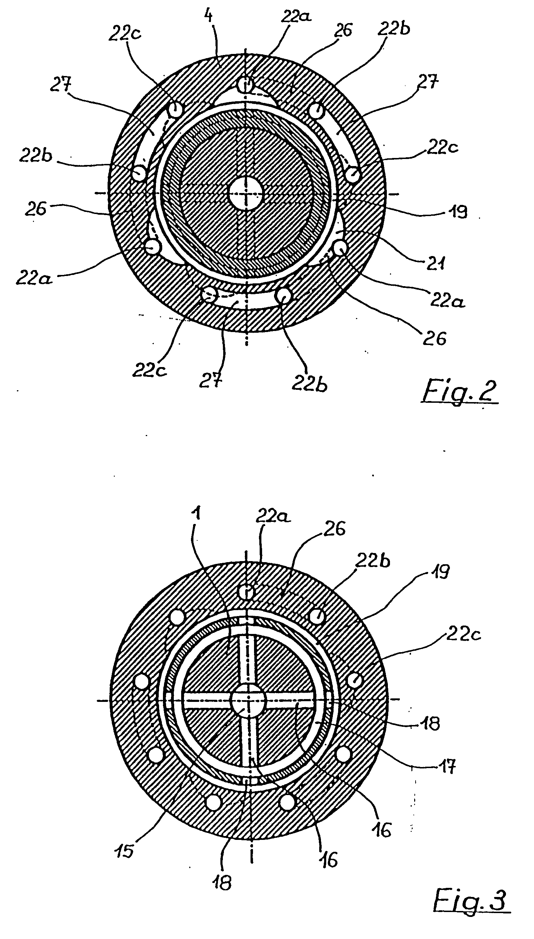

Das Kühlmittel durchströmt drei in Umfangsrichtung nebeneinander peripher im Rollenmantel 4 angeordnete Kühlmittelkanäle 22a, 22b, 22c in Reihe, wie dies in Fig. 2 in einer Schnittdarstellung entlang der Schnittlinie A - A aus Fig. 1 veranschaulicht ist, wobei die Schnittführung durch die zweite Verteiler-Ringnut 19 und die einlaufseitige halbmondförmige Ausfräsung 21 führt. Diese Kühlmittelkanäle 22a, 22b, 22c sind durch Verbindungskanäle 26, 27 verbunden, die von abgedeckten Einfräsungen in den Stirnseiten des Rollenmantels 4 gebildet sind. Durch die Umkehrung der Strömungsrichtung in benachbarten Kühlmittelkanälen 22a, 22b und 22b, 22c wird einer gleichmäßige Kühlwirkung über die Längserstreckung des Rollenmantels erzielt. Der Zusammenschluss von drei benachbarten Kühlmittelkanälen 22a, 22b, 22c hat sich hierbei als wirkungsvollste Ausführungsform herausgestellt, da die Wärmeaufnahme des Kühlmittels in einem Rollenmantel in einem Bereich gehalten wird, der eine Wärmeaufnahme in den nachfolgend durchströmten Rollmänteln in etwa gleicher Größenordnung gewährleistet.

Die Kühlmittelkanäle 22 sind in der Ausführungsform, wie sie in Fig. 1 dargestellt ist, von Durchgangsbohrungen gebildet, die Nahe der Rollenmantel-Außenfläche 4a parallel zur Drehachse 25 der Strangführungsrolle geführt sind. Der Abstand der Kühlmittelkanäle 22 von der Rollenmantel-Außenfläche 4a betragen etwa 10 bis 40 mm und ermöglichen solcherart eine intensive Kühlung und Wärmeabfuhr, sodass im stationären Gießbetrieb niedrige Oberflächentemperaturen von 130° bis 180° eingehalten werden können.

Fig. 3 zeigt eine weitere Schnittdarstellung der Strangführungsrolle entlang der Schnittlinie B-B aus Fig. 1, wobei die Schnittführung durch die radialen Stichbohrungen 16, 18 gelegt ist. Diese Darstellung zeigt die zentrale Kühlmittelleitung 15 in der zentralen Welle 1, die von der zentralen Kühlmittelleitung radial wegführenden vier Stichleitungen 16, die in einer ersten Verteiler-Ringnut 17 münden und vier weiterführende radiale Stichleitungen 18, die die Verbindung zur zweiten Verteiler-Ringnut 19 herstellen. Die über Verbindungskanäle, von denen nur der Verbindungskanal 26 dargestellt ist, zusammengeschlossenen Kühlmittelkanäle 22a, 22b, 22c münden mit dem Kühlmittelkanal 22c auslaufseitig anschließende halbmondförmige Ausfräsung 21, die hier mit dünnen Linien dargestellt ist.

Die Rückführung des Kühlmittels aus den peripheren Kühlmittelkanälen 22 erfolgt in umgekehrter Abfolge zur Kühlmittelzuführung. Die verbundenen Kühlmittelkanäle 22a, 22b, 22c münden in Stichleitungen 20, die von halbmondförmigen Ausfräsung 21 im Rollenmantel 4 gebildet sind und die eine Verbindung mit der zweiten Verteiler-Ringnut 19 im Wasserleitring 5 herstellen. Stichleitungen 18 verbinden die zweite Verteiler-Ringnut 19 mit einer ersten Verteiler-Ringnut 17 im Wasserleitring 5, von der weiter radiale Stichleitungen 16 den Rückfluss des Kühlmittels in die zentrale Kühlmittelleitung 15, durch die das Kühlmittel über die Drehdurchführung 12 die Strangführungsrolle wieder verlässt.

In die zentrale Kühlmittelleitung 15 sind entsprechend der Anzahl von Rollenmäntel 4 Sperrelemente 28 eingesetzt, mit denen die durchgehende zentrale Kühlmittelleitung so unterbrochen ist, dass das Kühlmittel in einem Durchlauf die einzelnen Rollenmäntel einer Strangführungsrolle durchläuft.

Die Kühlmittelzuführung und die Kühlmittelabführung durch die zentralen Kühlmittelleitungen kann jedoch auch einseitig, an einer Stirnseite der zentralen Welle, über eine zweigängige Drehdurchführung erfolgen, wodurch die Kühlmittelversorgung auf eine Seite der Strangführung und damit Anlagenseite einer Stranggießanlage beschränkt ist.

Die Kühlmittelzuführung zu und die Kühlmittelabführung von der Strangführungsrolle kann auch über den Strangführungsrahmen und die Lagerböcke der die Strangführungsrolle stützenden Lager erfolgen.

Damit an den Berührungsflächen zwischen zentraler Welle 1 und den Wasserleitringen 5 bzw. an den Berührungsflächen zwischen Rollenmantel 4 und den Wasserleitringen 5 kein Kühlmittel austreten kann, sind in diesen Bereichen Dichtelemente 19 angeordnet. Diese Dichtelemente sind von in Ringnuten eingesetzten Dichtringen gebildet.

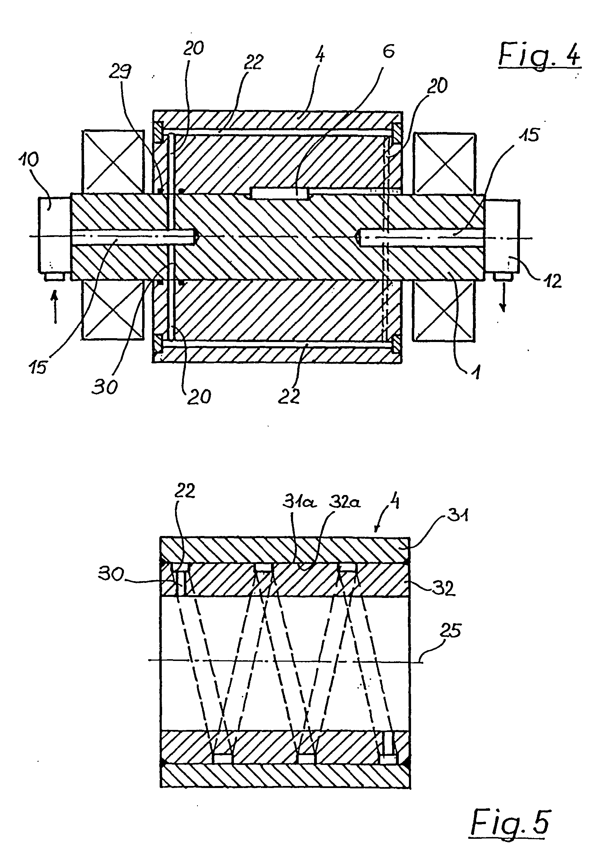

Fig. 4 zeigt in schematischer Darstellung eine Strangführungsrolle der erfindungsgemäßen Art ohne Einbindung eines Wasserleitringes. Auf der zentralen Welle 1 ist ein Rollenmantel 4 direkt abgestützt und mit einer von einer Passfeder gebildeten Verdrehsicherung 6 gegen Verdrehung gesichert und ermöglicht solcherart eine Drehmomentübertragung von der Welle auf den Rollenmantel und umgekehrt. die Anordnung mehrerer Rollenmäntel unter Zwischenschaltung einer Lagerstelle für die durchgehende zentrale Welle ist analog zur Ausführungsform nach Fig. 1 möglich.

Die Kühlmitteldurchführung durch die Strangführungsrolle erfolgt ausgehend von einer Drehdurchführung 10, durch die zentrale Kühlmittelleitung 15 und Stichleitungen 30 zu den axialen Kühlmittelkanälen 22 und von diesen zurück durch Stichleitungen 30 und die zentrale Kühlmittelleitung 15 zu einer weiteren Drehdurchführung 12. Dichtelemente 29 sind beispielsweise in die Innenmantelfläche des Rollenmantels 4 seitlich der Stichleitungen 30 in Ringnuten eingesetzt und verhindern Leckverluste. Die Kühlmittelkanäle 22 werden von durchgehenden Bohrungen im Rollenmantel 4 gebildet.

Wie in Fig. 5 schematisch dargestellt kann der Rollenmantel 4 auch von einem Kühlmittelkanal 22 durchsetzt werden, der wendelförmig entlang einer Wendellinie um die Drehachse 25 der Strangführungsrolle geführt ist. Der Rollenmantel 4 ist von zwei ringförmigen drehfest miteinander verbundenen Hülsen 31, 32 gebildet, wobei an den verbindenden Mantelflächen 31 a, 31 b dieser Hülsen 31, 32 in eine dieser Mantelflächen 32a ein wendelförmige Kühlmittelkanal 22 eingedreht ist. Die drehfeste Verbindung der beiden Hülsen 31, 32 wird durch Verschweißung hergestellt. Sie kann aber auch durch einen Schrumpfsitz erfolgen. Gleichermaßen kann der Rollenmantel auch bei der Anordnung von geraden parallel zur Drehachse der Strangführungsrolle angeordneten Kühlmittelkanälen von zwei drehfest verbundenen Hülsen gebildet sein. Hier können die Kühlmittelkanäle in fertigungstechnisch einfacher Weise in die Innenmantelfläche oder Außenmantelfläche der verbindenden Mantelflächen durch ein Längsstoßen hergestellt werden.

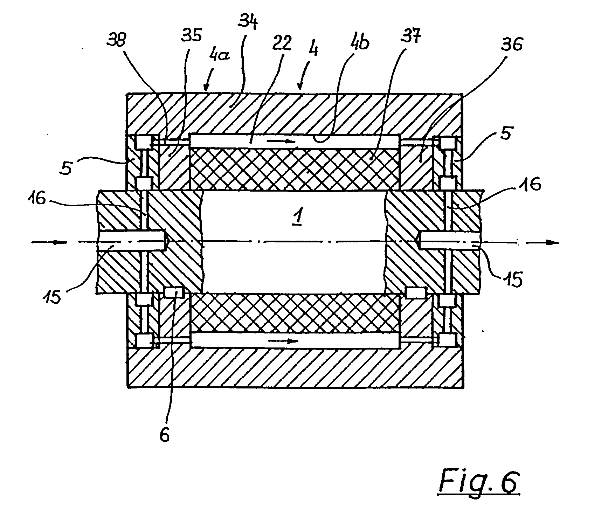

Eine weitere Ausführungsform der erfindungsgemäßen Strangführungsrolle ist in Fig. 6 dargestellt. Auf der zentralen drehbaren Welle 1 ist ein Rollenmantel 4 abgestützt, der von einer äußeren Hülse 34, ringförmigen Seitenteilen 35, 36 und einem Verdrängungskörper 37 gebildet ist. Der Rollenmantel ist mit Verdrehsicherungen 6 auf der zentralen Welle 1 festgelegt. Wasserleitringe 5 sind zwischen dem Rollenmantel 4 und der zentralen Welle 1 in den Endbereichen der Längserstreckung des Rollenmantels angeordnet und ermöglichen die Kühlmittelüberleitung von einer in der zentralen Welle angeordneten Kühlmittelleitung 15 über Stichleitungen 16 und Verbindungsleitungen 38 zu mindestens einem, vorzugsweise jedoch auf einem Teilkreis gleichmäßig verteilten Kühlmittelkanälen 22. Analog erfolgt die Kühlmittelabführung, wie bei den bereits beschriebenen Ausführungsformen. Die parallel zur Drehachse 25 der Strangführungsrolle angeordneten Kühlmittelkanäle 22 werden von der Innenwand 4b des Rollenmantels 4 und Ausnehmungen am Außenumfang des Verdrängungskörpers 37 gebildet. Die Durchströmrichtung des Kühlmittels, die Querschnittsform der Kühlmittelkanäle und deren gerade oder wedelförmige Ausrichtung kann hierbei völlig beliebig gestaltet sein.

Die Erfindung ist nicht auf das vorliegende Ausführungsbeispiel beschränkt. Vielmehr kann diese Strangführungsrolle in vielfältiger Weise innerhalb des Schutzumfanges modifiziert sein.

Beispielsweise kann die Strangführungsrolle in Abhängigkeit von den anlagenspezifischen Gießbreiten auf einer Stranggießanlage eine bestimmte Anzahl von Rollenmäntel umfassen, wobei ein bis vier auf einer durchgehenden zentralen Welle angeordnete Rollenmäntel zur Stützung und Führung von gegossenen Strängen durchaus üblich sind. Auch besteht die Möglichkeit, jeweils zwei zwischen einem Rollenmantel und der zentralen Welle angeordneten Wasserleitringe in einem hülsenartig ausgebildeten Wasserleitring zusammenzufassen, wobei in diesem Fall der hülsenartige Wasserleitring von der Verdrehsicherung durchsetzt ist. Weiters kann die Rollenmantel-Außenfläche durch Aufschweißungen gegen den starken Verschleiß zusätzlich geschützt sein. Es ist aber auch im Umfang des Schutzbereiches möglich, auf den Rollenmantel eine zusätzliche verschleißfeste Hülse aufzubringen, z.B. durch Aufschrumpfen oder stirnseitige Schweißung, die bei starker Abnützung entfernt bzw. erneuert wird.

## Patentansprüche

1. Innengekühlte Strangführungsrolle, vorzugsweise für eine Stranggießanlage, mit einer zentralen drehbaren Welle (1) und mindestens einem auf dieser Welle verdrehgesichert abgestützten Rollenmantel (4), **dadurch gekennzeichnet, dass** der Rollenmantel (4) von Kühlmittelkanälen (22, 22a, 22b, 22c) durchsetzt ist und die Kühlmittelkanäle in konstantem Abstand von der zylindrischen Rollenmantel-Außenfläche (4a) des Rollenmantels im Rollenmantel angeordnet sind.

2. Strangführungsrolle nach Anspruch 1, **dadurch gekennzeichnet, dass** die Kühlmittelkanäle (22, 22a, 22b, 22c) im Rollenmantel (4) parallel zur Drehachse (25) der Strangführungsrolle ausgerichtet sind.

3. Strangführungsrolle nach Anspruch 1, **dadurch gekennzeichnet, dass** die Kühlmittelkanäle (22, 22a, 22b, 22c) im Rollenmantel wendelförmig um die Drehachse (25) der Strangführungsrolle angeordnet sind.

4. Strangführungsrolle nach einem der Ansprüche 1 bis 3, **dadurch gekennzeichnet, dass** der Rollenmantel (4) aus zwei ringförmigen Hülsen (31, 32) besteht, die drehfest miteinander verbunden sind und die Kühlmittelkanäle (22, 22a, 22b, 22c) an den verbindenden Mantelflächen (31a, 32a) der beiden ringförmigen Hülsen in mindestens eine dieser verbindenden Mantelflächen eingearbeitet sind.

5. Strangführungsrolle nach einem der Ansprüche 1 bis 3, **dadurch gekennzeichnet, dass** der Rollenmantel (4) aus zumindest einer äußeren die Rollenmantel-Außenfläche (4a) ausbildenden Hülse (34), ringförmigen Seitenteilen (35, 36) und einem Verdrängungskörper (37) besteht und dieser Verdrängungskörper in einem sich zwischen den ringförmigen Seitenteilen erstreckenden Hohlraum des Rollenmantels eingesetzt ist, wobei der Verdrängungskörper gemeinsam mit der Innenwand (4b) der äußeren Hülse (34) Kühlmittelkanäle (22) für die Durchleitung eines Kühlmittels bildet.

6. Strangführungsrolle nach einem der vorhergehenden Ansprüche, **dadurch gekennzeichnet, dass** der Abstand der Kühlmittelkanäle (22, 22a, 22b, 22c) von der Rollenmantel-Außenfläche (4a) zwischen 10 mm und 40 mm beträgt.

7. Strangführungsrolle nach einem der vorhergehenden Ansprüche, **dadurch gekennzeichnet, dass** zwischen dem Rollenmantel (4) und der zentralen Welle (1) mindestens ein Wasserleitring (5) angeordnet ist.

8. Strangführungsrolle nach Anspruch 7, **dadurch gekennzeichnet, dass** der Wasserleitring (5) in den Endbereichen der Längserstreckung des Rollenmantels (4) zwischen dem Rollenmantel (4) und der zentralen Welle (1) angeordnet ist.

9. Strangführungsrolle nach einem der vorhergehenden Ansprüche, **dadurch gekennzeichnet, dass** die Kühlmittelkanäle (22) im Rollenmantel (4) über im Wesentlichen radiale Stichleitungen(16, 18, 20, 30) mit einer in der zentralen Welle (1) angeordneten Kühlmittelleitung (15) für die Zu- und Ableitung eines Kühlmittels verbunden und die im Wesentlichen radialen Stichleitungen vorzugsweise durch die Wasserleitringe (5) geführt sind.

10. Strangführungsrolle nach Anspruch 9, **dadurch gekennzeichnet, dass** die radialen Stichleitungen (16, 18, 20) innerhalb der Längserstreckung der Wasserleitringe (5) in mindestens eine Verteiler-Ringnut (17, 19) des Wasserleitringes münden.

11. Strangführungsrolle nach Anspruch 9 oder 10, **dadurch gekennzeichnet, dass** die Stichleitungen (20, 30) im Rollenmantel (4) von im Wesentlichen halbmondförmigen Ausfräsungen (21) gebildet sind.

12. Strangführungsrolle nach einem der vorhergehenden Ansprüche, **dadurch gekennzeichnet, dass** mehrere, vorzugsweise drei, im Rollenmantel (4) parallel nebeneinander angeordnete Kühlmittelkanäle (22a, 22b, 22c) zu einem durchgehenden Kühlmittelkanal (22) verbunden sind und Verbindungskanäle (26, 27) zwischen benachbarten Kühlmittelkanälen vorzugsweise von stirnseitigen Einfräsungen im Rollenmantel gebildet sind.

13. Strangführungsrolle nach einem der vorhergehenden Ansprüche, **dadurch gekennzeichnet, dass** zwischen Wasserleitringen (5) und Rollenmantel (4) und zwischen Wasserleitringen (5) und der zentralen Welle (1) Dichtelemente (29), vorzugsweise in Ringnuten eingesetzte Dichtringe angeordnet sind.

14. Strangführungsrolle nach einem der vorhergehenden Ansprüche, **dadurch gekennzeichnet, dass** der Rollenmantel (4) zumindest über einen Teilbereich seiner Längserstreckung direkt auf der zentralen Welle (1) abgestützt ist.

15. Strangführungsrolle nach einem der vorhergehenden Ansprüche, **dadurch gekennzeichnet, dass** der Rollenmantel (4) zur Welle (1) durch mindestens eine Verdrehsicherung (6), vorzugsweise eine Passfeder (7), drehgesichert ist.

16. Strangführungsrolle nach einem der vorhergehenden Ansprüche, **dadurch gekennzeichnet, dass** die in der zentralen Welle (1) geführte Kühlmittelleitung (15) für die Kühlmittelzuführung von einer Stirnseite der zentralen Welle ausgeht und die in der zentralen Welle angeordnete Kühlmittelleitung für die Kühlmittelabführung an der gegenüberliegenden Stirnseite der zentralen Welle mündet und jeder Kühlmittelleitung eine Drehdurchführung (10, 12) zugeordnet ist.

17. Strangführungsrolle nach einem der Ansprüche 1 bis 15, **dadurch gekennzeichnet, dass** die in der zentralen Welle geführten Kühlmittelleitungen in einer Stirnseite der zentralen Welle münden und diesen Kühlmittelleitungen eine mehrgängige Drehdurchführung zugeordnet ist.

## Claims

1. Internally cooled strand-guiding roll, preferably for a continuous casting installation, having a central rotatable shaft (1) and at least one roll shell (4) which is supported fixed against rotation on this shaft, **characterized in that** the roll shell (4) has coolant passages (22, 22a, 22b, 22c) passing through it, and the coolant passages are arranged in the roll shell at a constant distance from the cylindrical roll shell outer surface (4a) of the roll shell.

2. Strand-guiding roll according to claim 1, **characterized in that** the coolant passages (22, 22a, 22b, 22c) in the roll shell (4) are oriented parallel to the axis of rotation (25) of the strand-guiding roll.

3. Strand-guiding roll according to claim 1, **characterized in that** the coolant passages (22, 22a, 22b, 22c) in the roll shell are arranged helically around the axis of rotation (25) of the strand-guiding roll.

4. Strand-guiding roll according to one of claims 1 to 3, **characterized in that** the roll shell (4) comprises two annular sleeves (31, 32) which are rotationally fixedly connected to one another, and the coolant passages (22, 22a, 22b, 22c), at the connecting lateral surfaces (31a, 32a) of the two annular sleeves, are machined into at least one of these connecting lateral surfaces.

5. Strand-guiding roll according to one of claims 1 to 3, **characterized in that** the roll shell (4) comprises at least one outer sleeve (34), which forms the roll shell outer surface (4a), annular side parts (35, 36) and a displacement body (37), and this displacement body is inserted in a cavity in the roll shell extending between the annular side parts, the displacement body, together with the inner wall (4b) of the outer sleeve (34), forming coolant passages (22) for a coolant to pass through.

6. Strand-guiding roll according to one of the preceding claims, **characterized in that** the distance between the coolant passages (22, 22a, 22b, 22c) and the roll shell outer surface (4a) is between 10 mm and 40 mm.

7. Strand-guiding roll according to one of the preceding claims, **characterized in that** at least one water guide ring (5) is arranged between the roll shell (4) and the central shaft (1).

8. Strand-guiding roll according to claim 7, **characterized in that** the water guide ring (5) is arranged in the end regions of the longitudinal extent of the roll shell (4), between the roll shell (4) and the central shaft (1).

9. Strand-guiding roll according to one of the preceding claims, **characterized in that** the coolant passages (22) in the roll shell (4) are connected, via substantially radial branch lines (16, 18, 20, 30), to a coolant line (15), which is arranged in the central shaft (1), for supplying and discharging a coolant, and the substantially radial branch lines are preferably routed through the water guide rings (5).

10. Strand-guiding roll according to claim 9, **characterized in that** the radial branch lines (16, 18, 20), within the longitudinal extent of the water guide rings (5), open out into at least one distributor annular groove (17, 19) of the water guide ring.

11. Strand-guiding roll according to claim 9 or 10, **characterized in that** the branch lines (20, 30) in the roll shell (4) are formed by substantially half-moon-shaped milled-out portions (21).

12. Strand-guiding roll according to one of the preceding claims, **characterized in that** a plurality of, preferably three, coolant passages (22a, 22b, 22c) arranged parallel next to one another in the roll shell (4) are connected to form one continuous coolant passage (22), and connecting passages (26, 27) between adjacent coolant passages are preferably formed by end-side milled-in formations in the roll shell.

13. Strand-guiding roll according to one of the preceding claims, **characterized in that** sealing elements (29), preferably sealing rings inserted into annular grooves, are arranged between water guide rings (5) and roll shell (4) and between water guide rings (5) and the central shaft (1).

14. Strand-guiding roll according to one of the preceding claims, **characterized in that** the roll shell (4) is supported directly on the central shaft (1) at least over a subregion of its longitudinal extent.

15. Strand-guiding roll according to one of the preceding claims, **characterized in that** the roll shell (4) is fixed against rotation with respect to the shaft (1) by at least one rotation preventer (6), preferably a feather key (7).

16. Strand-guiding roll according to one of the preceding claims, **characterized in that** the coolant line (15) for supplying coolant, which is routed in the central shaft (1), starts from one end side of the central shaft, and the coolant line for discharging coolant, which is arranged in the central shaft, opens out at the opposite end side of the central shaft, and each coolant line is assigned a rotary leadthrough (10, 12).

17. Strand-guiding roll according to one of claims 1 to 15, **characterized in that** the coolant lines which are routed in the central shaft open out in one end side of the central shaft, and these coolant lines are assigned a multi-start rotary leadthrough.

## Revendications

1. Galet de guidage de barre refroidi par l'intérieur, de préférence pour une installation de coulée continue, comprenant un arbre rotatif central (1) et au moins une enveloppe de galet (4) supportée de manière fixe en rotation sur cet arbre, **caractérisé en ce que** l'enveloppe de galet (4) est traversée par des canaux de réfrigérant (22, 22a, 22b, 22c) et les canaux de réfrigérant sont disposés à une distance constante de la surface extérieure (4a) de l'enveloppe cylindre du galet dans l'enveloppe du galet.

2. Galet de guidage de barre selon la revendication 1, **caractérisé en ce que** les canaux de réfrigérant (22, 22a, 22b, 22c) sont orientés dans l'enveloppe de galet (4) parallèlement à l'axe de rotation (25) du galet de guidage de barre.

3. Galet de guidage de barre selon la revendication 1, **caractérisé en ce que** les canaux de réfrigérant (22, 22a, 22b, 22c) sont disposés dans l'enveloppe de galet de manière hélicoïdale autour de l'axe de rotation (25) du galet de guidage de barre.

4. Galet de guidage de barre selon l'une quelconque des revendications 1 à 3, **caractérisé en ce que** l'enveloppe de galet (4) se compose de deux gaines annulaires (31, 32) qui sont connectées l'une à l'autre de manière solidaire en rotation et les canaux de réfrigérant (22, 22a, 22b, 22c) sont incorporés au niveau des surfaces d'enveloppe de liaison (31a, 32a) des deux gaines annulaires dans au moins l'une de ces surfaces d'enveloppe de liaison.

5. Galet de guidage de barre selon l'une quelconque des revendications 1 à 3, **caractérisé en ce que** l'enveloppe de galet (4) se compose d'au moins une gaine extérieure (34) constituant la surface extérieure (4a) de l'enveloppe du galet, de parties latérales annulaires (35, 36) et d'un corps de déplacement (37) et ce corps de déplacement est inséré dans un espace creux de l'enveloppe du galet s'étendant entre les parties latérales annulaires, le corps de déplacement formant conjointement avec la paroi intérieure (4b) de la gaine extérieure (34) des canaux de réfrigérant (22) pour l'apport d'un réfrigérant.

6. Galet de guidage de barre selon l'une quelconque des revendications précédentes, **caractérisé en ce que** la distance des canaux de réfrigérant (22, 22a, 22b, 22c) à la surface extérieure (4a) de l'enveloppe du galet est de préférence comprise entre 10 et 40 mm.

7. Galet de guidage de barre selon l'une quelconque des revendications précédentes, **caractérisé en ce qu'**on prévoit entre l'enveloppe du galet (4) et l'arbre central (1) au moins une bague de guidage d'eau (5).

8. Galet de guidage de barre selon la revendication 7, **caractérisé en ce que** la bague de guidage d'eau (5) est disposée dans les régions d'extrémité de l'étendue longitudinale de l'enveloppe du galet (4) entre l'enveloppe du galet (4) et l'arbre central (1).

9. Galet de guidage de barre selon l'une quelconque des revendications précédentes, **caractérisé en ce que** l'on connecte les canaux de réfrigérant (22) dans l'enveloppe du galet (4) par le biais de conduites de dérivation sensiblement radiales (16, 18, 20, 30) à une conduite de réfrigérant (15) pour l'apport et l'évacuation de réfrigérant, disposée dans l'arbre central (1), et que l'on guide les conduites de dérivation de préférence à travers les bagues de guidage d'eau (5).

10. Galet de guidage de barre selon la revendication 9, **caractérisé en ce que** les conduites de dérivation radiales (16, 18, 20) débouchent à l'intérieur de l'étendue longitudinale des bagues de guidage d'eau (5) dans au moins une bague annulaire de distribution (17, 19) de la bague de guidage d'eau.

11. Galet de guidage de barre selon la revendication 9 ou 10, **caractérisé en ce que** les conduites de dérivation (20, 30) sont formées dans l'enveloppe de galet (4) par des fraisages (21) sensiblement en forme de demi-lune.

12. Galet de guidage de barre selon l'une quelconque des revendications précédentes, **caractérisé en ce que** plusieurs, de préférence trois, canaux de réfrigérant (22a, 22b, 22c) disposés parallèlement les uns à côté des autres dans l'enveloppe du galet (4) sont connectés pour former un canal de réfrigérant continu (22) et **en ce que** des canaux de liaison (26, 27) sont formés entre des canaux de réfrigérant adjacents de fraisages du côté frontal dans l'enveloppe du galet.

13. Galet de guidage de barre selon l'une quelconque des revendications précédentes, **caractérisé en ce que** l'on dispose entre les bagues de guidage d'eau (5) et l'enveloppe du galet (4) et entre les bagues de guidage d'eau (5) et l'arbre central (1) des éléments d'étanchéité (29), de préférence des bagues d'étanchéité insérées dans des rainures annulaires.

14. Galet de guidage de barre selon l'une quelconque des revendications précédentes, **caractérisé en ce que** l'enveloppe de galet (4) est supportée au moins sur une région partielle de son étendue en longueur directement sur l'arbre central (1).

15. Galet de guidage de barre selon l'une quelconque des revendications précédentes, **caractérisé en ce que** l'enveloppe de galet (4) est fixée en rotation par rapport à l'arbre (1) par au moins une fixation en rotation (6), de préférence un ressort d'ajustement (7).

16. Galet de guidage de barre selon l'une quelconque des revendications précédentes, **caractérisé en ce que** la conduite de réfrigérant (15) guidée dans l'arbre central (1) pour l'apport en réfrigérant sort d'un côté frontal de l'arbre central et la conduite de réfrigérant disposée dans l'arbre central, pour l'évacuation de réfrigérant, débouche au niveau du côté frontal opposé de l'arbre central et l'on associe à chaque conduite de réfrigérant un passage circulaire (10, 12).

17. Galet de guidage de barre selon l'une quelconque des revendications 1 à 15, **caractérisé en ce que** les conduites de réfrigérant guidées dans l'arbre central débouchent dans un côté frontal de l'arbre central et l'on associe à ces conduites de réfrigérant un passage circulaire à plusieurs spires.
